# EUROPEAN PATENT SPECIFICATION

(11) **EP 0 624 317 B1**
(45) Date of publication and mention of the grant of the patent: **04.08.1999**
(21) Application number: 94201346.7
(22) Date of filing: 11.05.1994
(51) Int. Cl.: A23C 1/12, A23C 11/04

(54) **A process for the preparation of milk concentrates and milk powders having a long storage life**
Ein Verfahren zur Herstellung von lagerstabilen Milchkonzentraten und Milchpulvern
Un procédé de préparation de concentrés et de poudres de lait de longue conservation

(30) Priority: 14.05.1993 NL 9300848
(43) Date of publication of application: 17.11.1994
(73) Proprietor: Friesland Brands B.V., 8937 AC Leeuwarden (NL)
(72) Inventor: De Boer, Cor, NL-8932 JS Leeuwarden (NL); Camminga, Ellert, NL-8915 DK Leeuwarden (NL); Glas, Cornelis, NL-9255 KE Tietjerk (NL); Weerstra, Rienk, NL-8933 CL Leeuwarden (NL)
(74) Representative: Smulders, Theodorus A.H.J., Ir.

(56) References cited:
- EP-A- 0 404 058
- FR-A- 476 719
- FR-A- 1 180 286
- FR-A- 2 522 935
- US-A- 1 432 633
- US-A- 2 769 489
- DATABASE WPI Week 8750, 1987 Derwent Publications Ltd., London, GB; AN 87-354084 & SU-A-1 308 309 (AS UKR THERMOPHYS) 7 May 1987

## Description

The present invention relates to a process for the preparation of milk concentrates and milk powders having a long storage life utilizing techniques which are known per se.

By bringing milk into a concentrated form or into a powder form and subjecting it to one or more heat treatments and to an aseptic packaging method, not only its storage life is prolonged but also the cost of transport is limited. For use, the concentrated or powdered milk product can be recombined or reconstituted.

In the case where in particular unsaturated fatty acid-containing compounds are present, however, the process of fat decay or 'turning rancid' develops relatively easily and rapidly with milk concentrates and milk powders. This process of turning rancid gives rise to deteriation of the taste and problems of uptake and easily leads to problems of indigestion, in particular in sensitive individuals. More particularly, this problem occurs with milk products which have been enriched with unsaturated fatty acid derivatives or in which the milk fat has been replaced completely with these derivatives. Examples of such unsaturated fatty acid derivatives include fats, phospholipids or emulsifiers which contain a high percentage of unsaturated fatty acids and/or strongly unsaturated fatty acids. Enrichment of milk and milk powders with unsaturated fatty acid-containing phospholipids or emulsifiers is done for technological or physiological reasons.

An important reason for enriching milk or milk powders with fats containing a high percentage of unsaturated fatty acids or strongly unsaturated fatty acids is to prevent or reduce cardiovascular diseases, atopies, rheumatic disorders or diabetes. In particular, such products contain a high percentage of oleic acid, linoleic acid which may or may not be conjugated, α-linolenic acid and unsaturated C₂₀ and C₂₂ fatty acids.

Thus, to prepare food for premature children the fat fraction of milk concentrates or milk powders is enriched with strongly unsaturated fatty acids of the type C₂₀ω-6 and C₂₂ω-6 + C₂₀ω-3 and C₂₂ω-3. These fatty acids are typically denoted by the name of LC-PUFAS, which is an abbreviation of "Long Chain Poly-Unsaturated Fatty Acids". Examples of LC-PUFAS include: C₁₈:3ω6 (γ-linolenic acid; GLA), C₂₀:3ω6 (dihomo-γ-linolenic acid), C₂₀:4ω6 (arachidonic acid; AA), C₁₈:4ω3 (octadecatetraenoic acid), C₂₀:5ω3 (eicosapentaenoic acid; EPA), C₂₂:6ω3 (docosahexaenoic acid; DHA or DCHA).

LC-PUFAS are preferably included in the fat fraction of food for premature children together with the biochemical precursors C₁₈:2ω6 (linoleic acid) and C₁₈:3ω3 (α-linolenic acid). The reason for this is that the biochemical conversion of the precursors by desaturase and elongase enzymes proceeds only suboptimally in premature infants. LC-PUFAS, such as GLA, AA, EPA and DHA, are incorporated in particular in the fat fraction of food for premature infants because these fatty acids are of importance for optimum structuring of the cell membranes.

Biochemical conversions may also proceed suboptimally in non-premature infants. This is in particular a medically recognized problem with the conversion of linoleic acid to γ-linolenic acid (GLA) in elderly people. The fat fraction of milk or milk powders is then enriched with unsaturated fatty acids of the type GLA.

From the prior art, for instance European patent application 0 404 058, it is known to avoid the problem of unsaturated fatty acid-containing products turning rancid by adding to them antioxidants, such as α-tocopherol, optionally together with an emulsifier, such as lecithin, and/or by gassing these products with, for instance, nitrogen gas and/or carbonic acid gas and subsequently storing them under this inert gas.

According to the invention, an improved method has now been found for preventing unsaturated fatty acid-containing products turning rancid. When a fat fraction containing strongly unsaturated fatty acids with an unstable character is added to the milk liquid to be concentrated only on one of the effects of the evaporator instead of being mixed with the milk liquid prior to the start of the evaporation step, the concentrated or powdered product acquires an improved storage stability.

The process for the preparation of milk concentrates and milk powders having a long storage life utilizing techniques which are known per se is characterized in that a milk liquid is prepared which is evaporated, a fat fraction containing unsaturated (free) fatty acids being added to the milk liquid in one or more effects of the evaporator.

Concentrated milk and milk powder obtained by the use of the process according to the invention have a prolonged storage life.

In accordance with the invention the fat to be added is metered during the evaporation in one or more of the effects of the evaporator. All this also simplifies the conduct of the process because less liquid needs to traverse the complete course of the evaporator and mixing capacity can be saved on. This is a second advantage of the process according to the invention.

Because of the last-mentioned advantage it is most advantageous to add the fat under the downpipes for the livid collector of the last effect of the evaporator. However, the addition can take place in the way indicated in any effect of the evaporator.

U.S. Patent 1,432,633 discloses an obsolete process for the preparation of a milk product which is composed of milk from which substantially all of the butter fat has been removed, and vegetable oils which are free of free fatty acids. The objective underlying this old patent is to provide a milk product of excellent flavor, the fat fraction being constituted by relatively inexpensive vegetable fat. The relatively costly animal fat can thus be made available for other uses. The milk product described can be partially condensed. Such partial condensation occurs discontinuously using a vacuum pan. After this step the fat fraction is added, followed by further condensation.

Similarly, French patent specification 476,719 discloses an obsolete process where a fat fraction is added to partially condensed low-fat or creamed milk. As in U.S. Patent 1,432,633, use is made of a vacuum pan. This discontinuous process is used, according to the French publication, to facilitate the obtainment of an emulsion. The maximum temperature in the emulsifying process described is 54°C.

In the process according to the invention, different fats and/or emulsifiers or emulsifier-containing compositions, such as phopholipid-containing compositions, buttermilk or butter serum, can be added to the same or different effects of the evaporator. The addition can take place before, in or after the liquid collector of an effect.

It is a further advantage of the process according to the invention that fatty acids which, for the purpose of certain uses, should occur in the fat fraction in very low percentages (0.05-0.5%) and in exact proportions, such as GLA, AA, EPA, DHA in the food of the premature child, are permanently present in the food in accurate amounts and proportions.

Another advantage of the process according to the invention is manifest in the case where powders are prepared. Milk powder which has been prepared in accordance with the present invention is less susceptible to fat decay during operations taking place before packaging under nitrogenous and/or carbon dioxide atmospheres, such as mixing with other ingredients or bacteriological checks.

The milk fluid which is the starting material of the process according to the invention and to which the 'unsaturated' fat is added in one or more effects of the evaporator, may or may not be obtained through recombination of milk raw materials and optional additives.

Thus, suitable milk liquids can be composed from whole milk (powder), partially creamed milk (powder), skim milk (powder), buttermilk (powder), butter serum, whey (powder), desalted whey (powder), derivatives recovered from whey - for instance lactose; hydrolyzed lactose; whey protein; whey protein fractions; galactoligosaccharides; and milk sugar-low whey powder - casein, glycomacropeptide-free casein, protein hydrolysates, and combinations of these raw materials. Optionally, it is possible to add, as additives, milk-foreign protein and/or carbohydrate sources, vitamins, minerals that are not prooxidative, nucleotides, nucleosides, aromatic, flavoring and coloring substances, amino acids and stabilizers

After, optionally, a preheating step and/or a homogenization step has been carried out, the milk liquid, after being prepared, is fed to the evaporator. During the evaporation process the fat fraction is added in one or more effects of the evaporator. Next, known process steps, such as homogenization, pasteurization, sterilization or spray-drying take place.

In a preferred embodiment, a thickened milk liquid is prepared in a process wherein before evaporation a preheating at 80-150 C occurs and after evaporation optionally standardization with water or solutions of phosphates occurs and further homogenization and sterilization occur.

If a concentrated liquid product is prepared, this is subsequently packaged in appropriate amounts in bottles, cans or other containers.

In the case where the intended product is powdered, packaging takes place in containers, typically utilizing liquid nitrogen and/or carbon dioxide.

The fat fraction which is fed into one or more effects of the evaporator, for instance by spraying, may contain fats such as fish oil, egg yolk fat, liver fat, evening primrose oil, algae oil, soya oil, corn oil, sunflower oil, groundnut oil, butter oil, lard, olive oil and fractions or mixtures thereof.

Preferably, the unsaturated fatty acids-containing fat fraction comprises fats rich in oleic acid, linoleic acid and linolenic acid; or fats containing C₂₀-C₂₂-ω6 and/or C₂₀-C₂₂-ω3 fatty acids, or fats containing C₁₈:3 ω6 fatty acids (γ-linoleic acid).

In a preferred embodiment the fats are added in combination.

Further, emulsifiers or emulsifier-containing liquids, such as buttermilk or butter serum which contain many phospholipids, can be sprayed in one or more effects of the evaporator.

Optionally, in addition, antioxidants, for instance ascorbyl palmitate, butylhydroxytoluene (BHT), vitamin E, (α-tocopherol), β-carotene, and lecithin can be added.

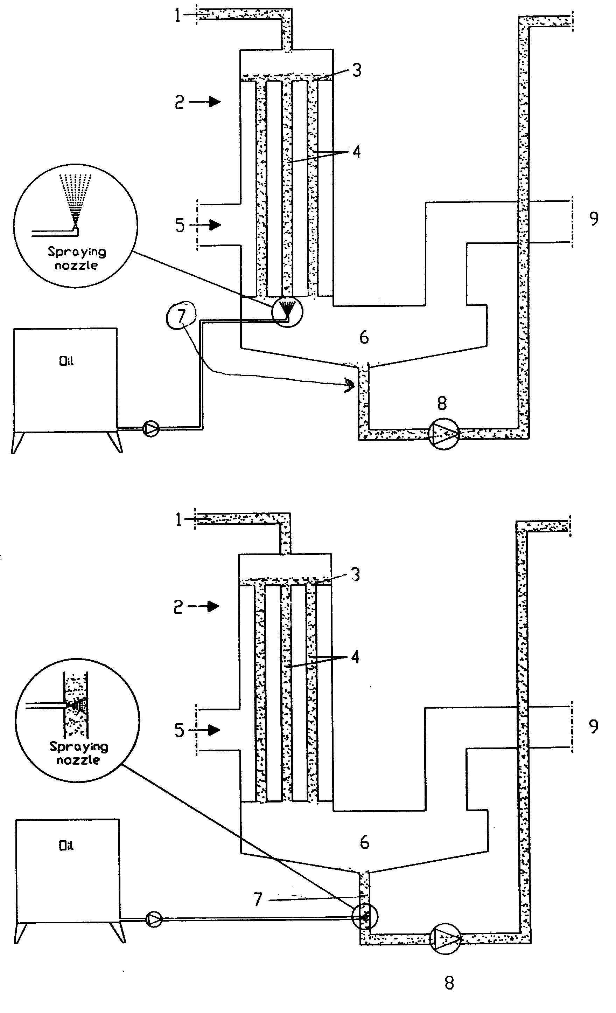

The present invention will now be further elucidated with reference to the drawing and in and by the following examples.

The drawing shows an effect of a multiple-effect evaporator. The milk liquid to be evaporated is introduced via pipe 1 into effect 2. Upon leaving pipe 1, the milk liquid is equally distributed by divider plates 3 over the downpipes 4. The milk liquid forms a film over the walls of these downpipes 4, which are heated externally with water vapor introduced via pipe 5. A two-phase flow of concentrate and vapor enter liquid collector 6, where product and vapor are separated. The product is pumped through pipe 7 and pump 8 to the divider plate of the next effect. The vapor is directed via line 9 to the next effect to condense on the outside of the downpipes. In the process according to the invention, a fat fraction can be supplied under the downpipes 4 or to the product flow in pipe 7.

### Example 1 Powdered food product for premature children.

1628 kg liquid containing 81 kg skim milk solids, 24.5 kg whey protein solids obtained through ultrafiltration, and 188 kg desalted whey solids, was divided in 2 portions A and B of 814 kg each. The solids content of this liquid was 18%.

To portion A (comparative example), 83 kg liquid fat (stored under nitrogen) was added with mixing at 50°C. This fat had the composition as shown in column C of Table I.

This fat-enriched liquid was subsequently evaporated to a solids content of 46% in an evaporator with three effects.

Portion B (invention) was evaporated to the extent where a product flow of a solids content of 35% was fed into the last effect of the evaporator. Under the downpipes of this last effect, 83 kg of the above fat composition was added to the liquid at 50°C, in such a manner that likewise a liquid of a solids content of 46% was obtained.

Both portions were subsequently homogenized in a two-stage homogenizer (100 + 30 bar), followed by cooling to 8°C and the addition, with mixing, to the liquid of a number of additives which are conventional for food for premature infants: minerals, except for copper and iron, vitamins, amino acids, taurine, uridine monophosphate, guanosine monophosphate, inosine monophosphate, cytidine monophosphate, adenosine monophosphate.

Then both portions were spray-dried (inlet temperature 186°C, outlet temperature 90°C) and a conventional premix (containing iron and copper) was admixed to form the desired end product. This product was packaged in cans, under nitrogen or not.

From a determination of the peroxide numbers of the fat fraction it appeared that the powders of batch B possessed a higher stability than the powders of batch A over a storage period of 13 and 26 weeks, respectively. The peroxide numbers of the fat fraction were determined according to a modification of the method of Loftus Hills and Thiel (Loftus Hills, G. and Thiel C.C, J.Dairy Res. 14 (1946), 340; Australian Standard N 63, (1968), p 22). According to this method, the fat is extracted from the powder at 55°C with a mixture of 1-chlorobutane/methanol, whereafter the peroxides present in the extract oxidize Fe(II) ions which have been added with a reagent, to form Fe(III) ions, whereafter the latter ions are determined spectrophotometrically by means of an ammonium rhodanide stain. The Table below presents the results of this peroxide number determination.

| | Peroxide number of the fat (meq/kg) in 20 samples Storage period at 20°C: | |
|---|---|---|
| | 13 weeks | 26 weeks |
| Batch A, not packaged under N₂ | 0.7 | 1.4 |
| Batch B, not packaged under N₂ | 0.02 | 0.6 |
| Batch A, packaged under N₂ | 0.3 | 1.4 |
| Batch B, packaged under N₂ | 0 | 0.7 |

A comparable conclusion could be drawn from tests where the fat fraction was enriched with additional antioxidant (dose 200 ppm ascorbyl palmitate on the fat, and 1000 ppm Ronoxan A® containing 25% ascorbyl palmitate, 5% dl-α-tocopherol and 70% lecithin), whether or not combined with bringing the powder under nitrogen gas directly after drying.

The addition of fat in the last effect of the evaporator led to an improved and optimum result in terms of product stability.

### Comparative Example 2 Evaporated milk ("Evap")

In accordance with a known method (C), 62 kg soya oil was added with vigorous stirring to a mixture of 390 kg whole milk, 1496 kg low-fat milk, and 107 kg butter serum. This mixture was heated up by known techniques, heated at 120°C for three minutes and evaporated to 7.8% fat and 18% non-fat milk solids (nfms). This product was subsequently homogenized (150 + 25 bar, 50°C).

This was followed by final standardization to 7.8% fat and 18% nfms with either water, or different amounts of solutions of Na₂HPO₄ and/or NaH₂PO₄ supplemented with water. This was followed by packaging in cans and sterilization at 121°C.

### Example 2 Evaporated milk ("Evap")

In accordance with the process of the present invention (D), 390 kg whole milk (4.38% fat and 8.85% nfms) was mixed with 1496 kg skim milk (0.03% fat and 9.24% nfms) and 107 kg butter serum (0.53% fat and 8.44% nfms). This mixed milk was heated to 120°C by known techniques, followed by sustained heating for 3 minutes. The hot milk was then transferred onto the first effect of a falling film evaporator (two effects) and evaporated to a solids content of approximately 21%. Under the downpipes of the second effect, 62 kg soya oil of 50°C, evenly distributed over the entire required evaporation time, was added in a constant flow. Thus a product with 7.8% fat and 18% nfms was obtained. This evap was subsequently homogenized in the conventional manner (150 + 25 bar, 50°C) and standardized either with water or with a solution of Na₂HPO₄ and/or NaH₂PO₄ in water. Finally, the evap was sterilized in cans, as described with reference to the traditional method (C).

### Example 3

Concentrated milk was produced as in Example 2, except that the butter serum was not mixed with the other milk liquids before evaporation but, after heating to 50°C, was injected into the second effect of the evaporator right beside the soya oil. The evap could be sterilized without addition of phosphates or other milk-foreign stabilizers.

### Example 4

Concentrated milk was prepared as in Example 3, but the soya oil was replaced with an oil containing 81% oleic acid (see oil B, Table I).

### Example 5

Concentrated milk was prepared as in Example 3, but the soya oil was replaced by fatty mixture C, as indicated in Table I.

According to the process of the present invention such as it has been illustrated in the Examples, oxidation-sensitive fatty acids enter into contact with oxygen to a minimal extent as compared with the process according to the comparative example. As a result, remarkably stable milk concentrates having a prolonged storage life are obtained by a simpler process operation.

**TABLE I**

| Fatty acid % | Soya oil | Oil B | Fat mixture C |
|---|---|---|---|
| C8 :0 | | | 1.1 |
| C10:0 | | | 1.1 |
| C12:0 | | | 12.6 |
| C14:0 | | - | 4.6 |
| C15 (a)iso | | | |
| C15 | | | |
| C16 (a)iso | | | |
| C16 iso | | | |
| C16:0 | 10.5 | 3.5 | 20.7 |
| C16:1ω7 | | | |
| C17 anteiso | | | |
| C17 iso | | | |
| C17:0 | | | |
| C17:1ω9 | | | |
| C18:0 | 4.0 | 4.0 | 3.1 |
| C18:1ω9 | 22 | 81 | 36.5 |
| C18:1ω7 | | | 0.1 |
| C18:2ω6 | 54.5 | 9.0 | 15.80 |
| C18:3ω6GLA | | | 0.35 |
| C18:3ω3 | 7.5 | | 1.9 |
| C18:4 | | | 0.05 |
| C20:0 | 0.5 | 0.5 | |
| C20:1ω9 | | | |
| C20:1ω7 | | | |
| C20:2ω6 | | | |
| C20:3ω6 | | | |
| C20:3ω3 | | | |
| C20:4ω6 AA | | | |
| C20:5ω3 EPA | | | 0.25 |
| C22:0 | 0.5 | 1.0 | |
| C22:1ω9/11 | | | |
| C22:2ω6 | | | |
| C22:4ω6 | | | |
| C22:5ω3 | | | |
| C22:6ω3 DHA | | | 0.35 |
| C24:0 | | | |
| C24:1ω9 | | | |
| other | 0.5 | 1.0 | 1.50 |

## Claims

1. A process for the preparation of milk concentrates and milk powders having a long storage life utilizing techniques which are known per se, characterized in that a milk liquid is prepared, which is evaporated, a fat fraction containing unsaturated free fatty acids being added to the milk liquid in one or more effects of the evaporator.

2. A process according to claim 1, wherein the unsaturated fatty acids-containing fat fraction comprises fats rich in oleic acid, linoleic acid and linolenic acid.

3. A process according to claim 1, wherein the unsaturated fatty acids-containing fat fraction comprises fats containing C₂₀-C₂₂ ω6 and/or C₂₀-C₂₂ ω3 fatty acids.

4. A process according to claim 1, wherein the unsaturated fatty acids-containing fat fraction comprises fats containing C₁₈:3 ω6 fatty acids (γ-linolenic acid).

5. A process according to any one of the preceding claims, wherein the fats are added in combination.

6. A process according to any one of the preceding claims, wherein emulsifiers or emulsifier-containing liquids are added on one or more effects of the evaporator.

7. A process according to claim 6, wherein, as emulsifier-containing liquid, butter serum or buttermilk is added.

8. A process according to any one of the preceding claims, wherein a thickened milk liquid is prepared.

9. A process according to claim 8, wherein before evaporation a preheating at 80-150°C occurs and after evaporation optionally standardization with water or solutions of phosphates occurs and further homogenization and sterilization occur.

10. A process according to claim 8, wherein the thickened milk liquid, whether or not after homogenization, cooling and/or pasteurization, is subsequently dried to form a powder.

11. A process according to claim 10, wherein the powder is brought under nitrogen and/or carbon dioxide directly after drying.

## Patentansprüche

1. Verfahren zur Herstellung von Milchkonzentraten und Milchpulvern mit einer langen Haltbarkeit, unter Verwendung von an sich bekannten Techniken, dadurch gekennzeichnet, dass eine Milchflüssigkeit hergestellt wird, die verdampft wird, wobei eine Fettfraktion, enthaltend ungesättigte freie Fettsäuren, zu der Milchflüssigkeit in einer oder mehreren Wirkstufen des Verdampfers hinzugefügt werden.

2. Verfahren gemäss Anspruch 1, wobei die ungesättigte Fettsäuren enthaltende Fettfraktion Fette umfasst, die reich an Ölsäure, Linolsäure und Linolensäure sind.

3. Verfahren gemäss Anspruch 1, wobei die ungesättigte Fettsäuren enthaltende Fettfraktion Fette, enthaltend C₂₀₋₂₂-ω6- und/oder C₂₀₋₂₂-ω3-Fettsäuren, umfasst.

4. Verfahren gemäss Anspruch 1, wobei die ungesättigte Fettsäuren enthaltende Fettfraktion Fette, enthaltend C₁₈:3 ω6-Fettsäuren (γ-Linolensäure), umfasst.

5. Verfahren gemäss einem der vorhergehenden Ansprüche, wobei die Fette in Kombination hinzugefügt werden.

6. Verfahren gemäss einem der vorhergehenden Ansprüche, wobei Emulgatoren oder emulgatorhaltige Flüssigkeiten in einer oder mehreren Wirkstufen des Verdampfers hinzugefügt werden.

7. Verfahren gemäss Anspruch 6, wobei als emulgatorhaltige Flüssigkeit Butterserum oder Buttermilch hinzugefügt wird.

8. Verfahren gemäss einem der vorhergehenden Ansprüche, wobei eine verdickte Milchflüssigkeit hergestellt wird.

9. Verfahren gemäss Anspruch 8, wobei vor dem Verdampfen ein Vorheizen bei 80 bis 150°C durchgeführt wird und nach dem Verdampfen wahlweise eine Standardisierung mit Wasser oder Phosphatlösungen durchgeführt wird, und weiterhin eine Homogenisierung und Sterilisation durchgeführt wird.

10. Verfahren gemäss Anspruch 8, wobei die verdickte Milchflüssigkeit, unter Umständen nach Homogenisierung, Abkühlung und/oder Pasteurisierung, anschliessend getrocknet wird, um ein Pulver zu bilden.

11. Verfahren gemäss Anspruch 10, wobei das Pulver unter Stickstoff und/oder Kohlendioxid direkt nach dem Trocknen gebracht wird.

## Revendications

1. Procédé de préparation de concentrés et de poudres de lait de longue conservation en utilisant des techniques connues en soit, caractérisé en ce que l'on prépare un lait sous forme liquide, lequel est évaporé, une fraction grasse contenant des acides gras libres insaturés étant ajoutée au lait liquide en un ou plusieurs effets de l'évaporateur.

2. Procédé selon la revendication 1, dans lequel la fraction grasse contenant des acides gras insaturés comprend des grasses riches en acide oléique, acide linoléique et acide linolénique.

3. Procédé selon la revendication 1, dans lequel la fraction grasse contenant des acides gras insaturés comprend des graisses contenant des acides gras en ω6-C₂₀-C₂₂ et/ou en ω3-C₂₀-C₂₂.

4. Procédé selon la revendication 1, dans lequel la fraction grasse contenant des acides gras insaturés comprend des grasses contenant des acides gras ω6 C₁₈:3 (acides γ-linolénique).

5. Procédé selon l'une quelconque des revendications précédentes, dans lequel les grasses sont ajoutées sous forme combinée.

6. Procédé selon l'une quelconque des revendications précédentes, dans lequel les émulsifiants ou liquides contenant l'émulsifiant sont ajoutés en un ou plusieurs stades de l'évaporateur.

7. Procédé selon la revendication 6 dans lequel on ajoute, à titre de liquide contenant un émulsifiant, du sérum de beurre ou du lait de beurre.

8. Procédé selon l'une quelconque des revendications précédentes, dans lequel on prépare un lait liquide épaissi.

9. Procédé selon la revendication 8, dans lequel préalablement à l'évaporation, on réalise un préchauffage à 80-150°C et après évaporation, on réalise éventuellement une standardisation avec de l'eau ou des solutions de phosphate et on réalise en outre une homogénéisation et une stérilisation.

10. Procédé selon la revendication 8, dans lequel le lait liquide épaissi, après ou non homogénéisation, refroidissement et/ou pasteurisation est consécutivement séché pour former une poudre.

11. Procédé selon la revendication 10, dans lequel la poudre est mise en présence d'azote et/ou de dioxyde de carbone directement après le séchage.
